Europäisches Patentamt

European Patent Office

Office européen des brevets

(11) Numéro de publication: **0 469 945 B1**

(12) **FASCICULE DE BREVET EUROPEEN**

(45) Date de publication de fascicule du brevet: **30.11.94** (51) Int. Cl.⁵: **B64G 1/32**, B64G 1/42

(21) Numéro de dépôt: **91401962.5**

(22) Date de dépôt: **15.07.91**

(54) Satellite artificiel stabilisé en attitude par autorotation à compensation passive de la pression de radiation solaire.

(30) Priorité: **31.07.90 FR 9009764**

(43) Date de publication de la demande:
**05.02.92 Bulletin 92/06**

(45) Mention de la délivrance du brevet:
**30.11.94 Bulletin 94/48**

(84) Etats contractants désignés:
**BE DE ES GB IT NL SE**

(56) Documents cités:
**FR-A- 1 468 087**
**FR-A- 2 177 364**
**US-A- 3 390 848**

(73) Titulaire: **AEROSPATIALE Société Nationale Industrielle**
**37, Boulevard de Montmorency**
**F-75781 Paris Cédex 16 (FR)**

(72) Inventeur: **Reboux, Alain**
**1bis rue du Mitan**
**F-83440 Fayence (FR)**

(74) Mandataire: **Rinuy, Santarelli**
**14, avenue de la Grande Armée**
**F-75017 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

L'invention concerne un satellite sur orbite terrestre, stabilisé en attitude par autorotation (on parle parfois en abrégé de "satellite spinné") et vise à minimiser leur sensibilité à certaines causes de perturbations extérieures.

Tout satellite est soumis à des forces perturbatrices externes liées à son environnement :
- pression de radiation solaire,
- gradient de gravité,
- champ magnétique terrestre, et
- traînée atmosphérique (surtout en orbite basse).

La pression de radiation solaire est généralement la perturbation prépondérante en orbite géostationnaire.

La non-coïncidence du centre de gravité du satellite et du centre d'application des forces externes se traduit par l'apparition de couples exercés sur le satellite.

Dans un tel environnement, la stabilité du satellite est assurée généralement par la création d'un moment cinétique important :
- soit au moyen de la rotation du satellite lui-même (satellite stabilisé par auto-rotation),
- soit au moyen de roues d'inertie destinées à créer artificiellement un moment cinétique dans le cas d'un satellite dit "stabilisé trois axes".

Néanmoins, l'effet des couples externes appliqués se traduit alors par une modification des caractéristiques du moment cinétique et en particulier de sa direction, c'est-à-dire une dérive de l'attitude du satellite.

Afin de satisfaire aux contraintes de stabilité du satellite liées à sa mission (pointage des antennes, ou des instruments d'observation notamment), une compensation doit être effectuée (on parle de contrôle d'attitude du satellite). Celle-ci fait appel à des actuateurs appropriés (tuyères à jet de gaz et autres dispositifs).

Dans le cas d'un satellite en autorotation autour d'un axe proche de la direction NORD-SUD, la mise en oeuvre d'actionneurs magnétiques a pour inconvénient que la direction du moment magnétique susceptible d'interagir efficacement avec le champ magnétique terrestre tourne avec le satellite.

En fait, le document US-A-3.390.848 envisage déjà de tirer profit du champ magnétique terrestre pour contrôler l'attitude d'un satellite stabilisé par autorotation. Toutefois, ce document se limite au cas d'une attitude de consigne où l'axe d'autorotation est perpendiculaire à la direction solaire instantanée et suppose pour ce faire une constitution tout à fait particulière pour le satellite et pour son générateur solaire ; le satellite a une forme massive dont l'essentiel de la surface externe est recouvert de 18 panneaux solaires ; ces panneaux solaires sont répartis en deux groupes situés respectivement au-dessus et en-dessous d'une ligne équatoriale (vis-à-vis du Soleil) et une bobine magnétique est alimentée par la différence des courants issus des deux groupes. Il est indiqué que le moment magnétique généré est dirigé selon l'axe d'autorotation ; on en déduit que, pour que le couple généré par interaction avec le champ magnétique terrestre soit significatif, l'axe d'autorotation qui doit rester perpendiculaire à la direction solaire doit avoir en outre une inclinaison significative par rapport à la direction locale du champ magnétique terrestre : il en résulte des conditions particulières sur l'orbite que doit suivre le satellite considéré (en particulier, il ne peut s'agir d'une orbite équatoriale).

En dehors du cas précité qui constitue une exception dont l'intérêt pratique est très réduit, il n'existe en fait pour les satellites en autorotation que des actionneurs à action brutale (tuyères à jet de gaz en pratique).

Les manoeuvres de contrôle d'attitude s'accompagnent alors d'une perturbation momentanée de l'attitude nominale du satellite, et donc d'une interruption de la mission. Comme ces manoeuvres doivent être effectuées régulièrement, elle induisent des interruptions fréquentes de mission. En outre, la génération des jets de gaz impliquées par ces manoeuvres nécessite une consommation de propergols qui réduit à la durée de vie totale du satellite.

L'invention a pour objet de pallier les inconvénients précités à propos d'un satellite en autorotation, en particulier dans le cas où celui-ci est sur une orbite équatoriale, de préférence géostationnaire, c'est-à-dire dans un cas où les perturbations externes sont dues principalement à la pression de radiation solaire (au delà des orbites dites basses, par exemple à une attitude comprise typiquement entre 20.000 et 40.000 km).

Elle vise à cet effet, sur un satellite en autorotation, à compenser de façon aussi complète que possible les perturbations dues à la pression de radiation solaire et aux variations de celle-ci, tout en minimisant la consommation d'ergols, les interruptions de mission, et sans induire de supplément sensible en masse, en encombrement et en prix de revient.

Elle propose à cet effet un satellite destiné à être stabilisé en attitude sur une orbite terrestre par autorotation autour d'un axe au moins approximativement orienté NORD-SUD, comportant une paroi externe généralement cylindrique coaxiale à cet axe, et un générateur solaire comprenant une pluralité de colonnes de cellules solaires portées par cette paroi parallèlement à et tout autour de cet axe, ces cellules étant réparties en groupes de cellules montées en série adaptées à fournir au moins une tension électrique donnée, caractérisée en ce que :

- dans chacun d'une pluralité de groupes régulièrement répartis circonférentiellement, les cellules montées en série sont réparties à cheval sur deux colonnes, ces deux colonnes étant connectées électriquement l'une à l'autre par au moins deux liaisons électriques respectivement appelées NORD et SUD, et ayant des dimensions égales transversalement à l'axe, appartenant chacune à l'un des groupes, et formant conjointement avec ce ou ces groupe(s) au(x)quel(s) ces liaisons appartiennent une boucle électrique discontinue admettant un sens trigonométrique prédéterminé de parcours de courant en cas d'éclairage des cellules appartenant à cette boucle,
- ce sens trigonométrique prédéterminé de parcours de courant étant le même pour au moins la majorité de ces boucles électriques et étant choisi en sorte que, à tout instant, les boucles qui sont éclairées à cet instant par le Soleil induisent, par interaction avec le champ magnétique terrestre, un couple de compensation autour d'un axe transversal instantané du satellite de sens opposé au couple de pression de radiation solaire subi par ce satellite autour de cet axe instantané.

Ainsi donc, l'invention permet, par interaction avec le champ magnétique terrestre, de tirer profit de l'énergie solaire pour compenser au moins partiellement le couple transversal perturbateur résultant de la pression de radiation induite par cette énergie solaire.

On appréciera que l'invention fait jouer une double fonction aux cellules solaires (génération de courant et compensation) et que pour ce faire il a fallu surmonter le préjugé de l'homme de métier qui l'amenait à exclure a priori tout "montage" en boucle de ces cellules.

On définira dans la suite une boucle électrique (ou boucle de courant) comme étant un circuit électrique globalement fermé sur lui-même, continu ou non (donc formé d'un ou plusieurs groupes), dans lequel circulent des courants de même sens trigonométrique, ce circuit comportant au moins deux liaisons électriques transversales continues NORD et SUD (ou brins transversaux) de mêmes dimensions égales transversalement à l'axe (des courants y circulent donc en sens opposés). On notera que peu importe que les brins longitudinaux de ce circuit ne soient pas continus puisqu'ils sont de même direction que le champ magnétique terrestre, et ne participent donc pas à la génération du couple compensateur.

Selon des dispositions préférées de l'invention, éventuellement combinées :

- lesdites colonnes sont reliées par deux liaisons électriques et seulement deux,
- chaque colonne n'est reliée qu'à une seule autre colonne,
- les deux colonnes sont connectées par leurs cellules extrêmes par deux liaisons électriques de même longueur,
- chaque groupe de cellules s'étend à cheval sur deux moitiés de colonnes,
- les colonnes, sur lesquelles les cellules montées en série sont réparties, sont adjacentes,
- les colonnes sur lesquelles les cellules montées en série sont réparties, sont séparées par au moins une autre colonne, les groupes de cellules formant ainsi des boucles imbriquées,
- les colonnes de cellules s'étendent sensiblement sur toute la dimension axiale de la paroi généralement cylindrique,
- ladite pluralité de groupes comprend la plupart des groupes de cellules,
- ladite pluralité de groupes comprend au moins les trois quarts environ des groupes de cellules,
- ladite pluralité de groupes comprend au moins les neuf dixièmes environ des groupes de cellules,
- ledit sens trigonométrique prédéterminé de parcours de courant est le même pour au moins la plupart des boucles,
- ledit sens trigonométrique prédéterminé de parcours de courant est le même pour au moins les trois quarts environ des boucles,
- ledit sens trigonométrique prédéterminé de parcours de courant est le même pour au moins les neuf dixièmes environ des boucles.

Des objets, caractéristiques et avantages de l'invention ressortent de la description qui suit, donnée à titre d'exemple non limitatif, en regard des dessins annexés sur lesquels :

- la figure 1 est une vue schématique en perspective montrant la configuration orbitale d'un satellite autour de la Terre,
- la figure 2 est une vue schématique en élévation de ce satellite,
- la figure 3 est un schéma de principe, en perspective, de ce satellite,
- la figure 4 est un schéma, de principe, en coupe transversale de ce satellite,

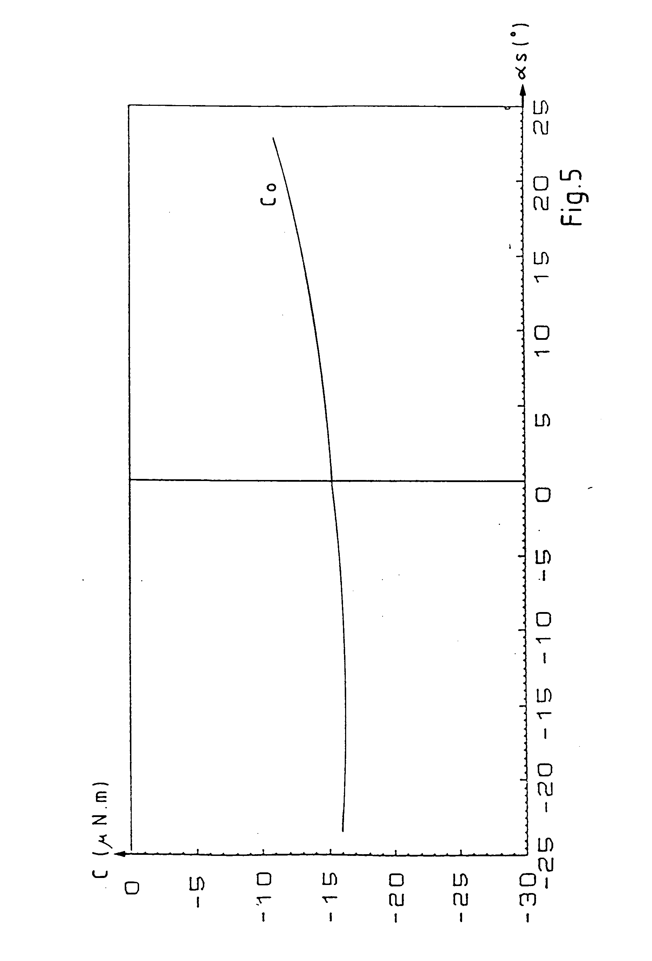

- la figure 5 est un graphique montrant la variation du couple solaire avec l'incidence solaire, c'est-à-dire entre deux solstices (entre hiver et été), et
- la figure 6 est un graphique représentant les variations de couple solaire, de couple compensateur, et résiduel sur la même période.

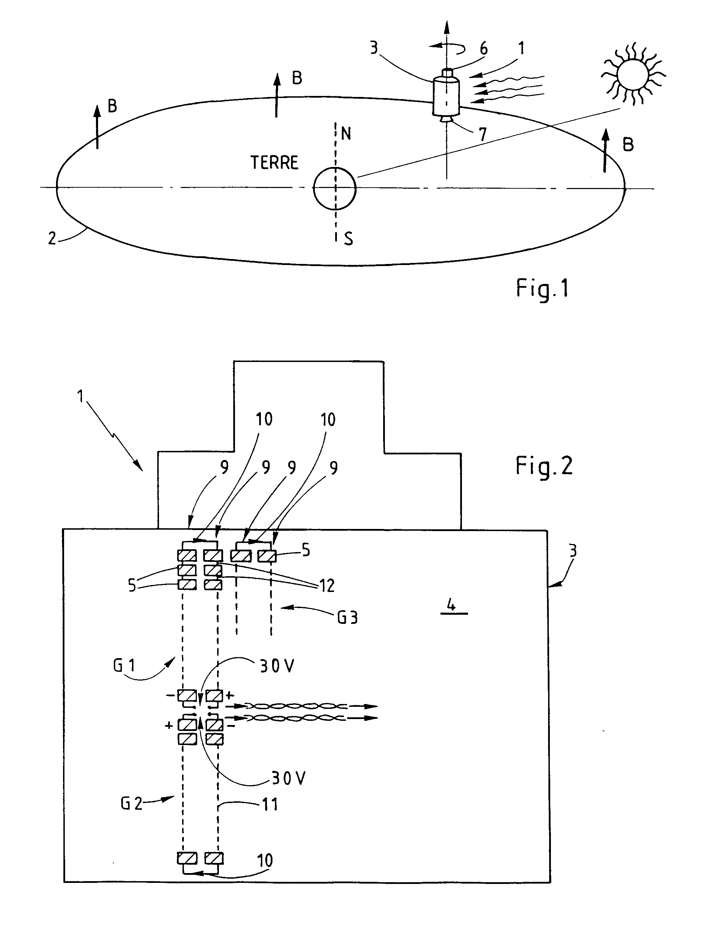

La figure 1 représente un satellite 1 stabilisé en autorotation sur une orbite équatoriale 2 autour de la Terre qui génère un champ magnétique $\vec{B}$.

Ce satellite 1 est en autorotation autour d'un axe principal Z orienté au moins approximativement NORD-SUD.

Ce satellite comporte un corps 3 dont la paroi externe 4 est sensiblement cylindrique autour de l'axe Z : cette paroi a ici une section circulaire, mais peut aussi, dans des variantes non représentées, avoir par exemple une section polygonale.

Cette paroi 4 est de façon classique recouverte par une pluralité circonférentielle de colonnes adjacentes 9 de cellules solaires 5 adaptées à être soumises au rayonnement solaire. L'ensemble de ces cellules solaires constitue un générateur solaire qui alimente divers équipements électriques embarqués (de tout type connu approprié) sous une tension donnée, par exemple 30 V. En fait, ces cellules sont regroupées en groupes de cellules montées en série adaptés à fournir cette tension (trois groupes G1, G2, G3 sont représentés à titre d'exemple). En effet, il suffit généralement en pratique d'un seul niveau de tension, mais plusieurs niveaux de tension peuvent être prévus. Il est rappelé que chaque cellule solaire est un générateur électrique élémentaire de polarités prédéterminées ; toutefois seules les polarités des groupes apparaissent à la figure 2.

Selon l'invention, ces cellules solaires 5 sont reliées par un câblage choisi en sorte, d'une part de fournir comme par le passé la puissance électrique voulue, d'autre part de participer efficacement à la compensation des perturbations induites par la pression de radiation solaire.

Le reste de la structure du satellite, ne faisant pas partie de l'invention, ne sera pas détaillé plus avant. Il suffira de noter que ce satellite comporte une tour d'antenne 6, d'un côté du corps, et une (ou des) tuyère(s) d'apogée 7 de l'autre côté.

Il s'agit par exemple, mais non nécessairement, d'un satellite du type décrit dans la demande de brevet français 90-02.367.

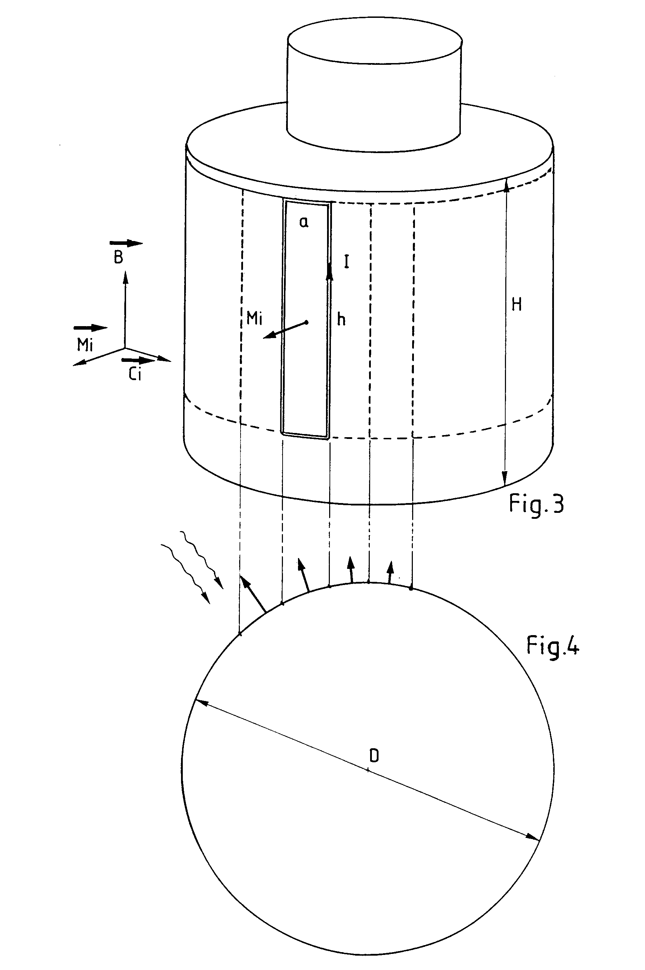

Le principe de l'invention (figure 3) repose sur l'interaction du champ magnétique terrestre $\vec{B}$ (orienté selon un axe Nord-Sud comme l'axe de rotation du satellite) avec des boucles de courant électrique disposées sur la paroi externe 4 du corps 3 du satellite, et créées uniquement par le câblage adéquat des cellules du générateur solaire, chaque groupe (G1, G2, G3...) ayant ses cellules réparties sur deux colonnes en sorte de former une boucle, à lui seul ou avec d'autres groupes.

Dans l'exemple considéré, chaque boucle est formée de deux groupes formant deux U dont les concavités se font face (on ne tient pas compte des tronçons horizontaux comportant les bornes entre lesquelles est prélevée la tension).

Chaque boucle de courant $\underline{i}$ engendre, lorsqu'elle est éclairée, un moment magnétique $\vec{M_i}$ perpendiculaire à celle-ci et donc au champ magnétique terrestre $\vec{B}$. Il en résulte un couple

$$\vec{C_i} \;=\; \vec{M_i} \wedge \vec{B}$$

exercé sur le satellite. En raison de la forme quasi-cylindrique du générateur solaire et de l'éclairement sélectif des boucles, la composition de l'ensemble des boucles similaires éclairées détermine un moment magnétique

$$\vec{\mathcal{H}} = \Sigma \; \vec{M_i}$$

orienté selon un axe Satellite-Soleil et donc un couple

$$\vec{C} \;= \Sigma \; \vec{C_i}$$

de même axe que le couple perturbateur $C_o$ dû à la pression de radiation solaire s'appliquant sur l'ensemble du satellite. Moyennant un dimensionnement correct des boucles, et un positionnement approprié de celles-ci parallèlement à l'axe Z (au nord ou au sud du centre de masse, selon les caractéristiques thermo-optiques des surfaces externes du satellite autres que la paroi 4), on peut obtenir un couple de compensation C' opposé et avantageusement sensiblement de même valeur que le couple perturbateur, compensant celui-ci pendant toute la durée de vie du satellite.

Plus précisément les cellules photovoltaïques 5 implantées sur la surface externe quasi-cylindrique 4 du satellite 1 sont câblées de façon à fournir la tension souhaitée pour l'alimentation électrique des équipements, mais aussi de façon à obtenir des boucles de courant adjacentes à la périphérie du satellite de largeur a et de hauteur h (donc de surface A = a.h.), parcourues par un courant I. Le moment magnétique créé au sein de chaque boucle vaut :

$$M_i = A . I = a . h . I$$

de direction normale à sa surface.

En raison de l'éclairement sélectif des boucles (en fonction de l'angle entre la normale au plan de chaque boucle et la direction du flux solaire incident) on démontre que la résultante des moments magnétiques individuels sur la paroi du diamètre D est un moment orienté selon la direction satellite-soleil et de valeur

$$\mathcal{H} = \sum M_i = (Dh)^2 I_o$$

avec

I_o = P_o/V où
P_o = puissance électrique fournie par le générateur solaire par unité de surface et
V = tension nominale d'utilisation.

Dans la pratique, il convient de faire intervenir un coefficient d'efficacité (e) du câblage (taux de recouvrement de la paroi 4 par les boucles) par rapport à un câblage idéal (boucles parfaitement jointives) :

$$\mathcal{H} = (Dh)^2 I_o e$$

e < 1 (câblage par boucles adjacentes disjointes)
e > 1 (câblage par boucles entrelacées)

Pour faire varier ce coefficient e, on peut jouer sur les dimensions et l'écartement des cellules 5 et aussi sur le positionnement circonférentiel des fils de connexion entre les cellules montées en série, constituant conjointement les brins longitudinaux des boucles.

Afin de réaliser la compensation souhaitée du couple de pression solaire :

- on évalue la valeur moyenne de ce dernier, déterminé par :
  . les caractéristiques externes du satellite (dimensions, coefficients thermo-optique des revêtements),
  . la constante solaire (puissance reçue par unité de surface, typiquement 1400 watts/m²),
  . la position du centre de gravité le long de l'axe Z,
- on choisit le câblage des cellules photovoltaïques du générateur solaire, donc a et h de façon à obtenir une valeur moyenne du moment compensateur $\mathcal{M}$ égale à la précédente.

Il est commode mais pas nécessaire de prendre h = H la dimension axiale de la paroi 4 (simplification du câblage) ; et on choisit avantageusement un nombre de cellules tel que leur mise en série sur la hauteur H (et donc sur deux demi-colonnes) procure la tension V voulue.

On notera que l'on passe du moment compensateur au couple compensateur par simple multiplication vectorielle par $\vec{B}$.

Les deux couples antagonistes sont sujets à des variations saisonnières liées à la variation d'angle d'aspect solaire (angle entre la direction du flux solaire et le plan de l'orbite couramment appelé "élévation") notée ici $\alpha_s$. Pour ce qui concerne le corps 3 du satellite (supportant le générateur solaire) la variation du couple de pression solaire est analogue à celle du couple compensateur (proportionnelles à $\cos\alpha_s$). Ces variations sont donc sensiblement auto-compensées. La contribution des autres surfaces externes au couple perturbateur est généralement sensiblement moindre (incidence solaire rasante pour les faces transversales et faibles dimensions des parties verticales hors du générateur solaire.

Le système proposé a été appliqué à un satellite comportant :

- un corps principal cylindrique, de diamètre 3.2m et hauteur 2.3m,
- une tour d'antenne également cylindrique, de diamètre réduit et de hauteur 1.1m décrit sur la figure 2.

Le niveau du couple perturbateur $C_o$ dû à la pression de radiation solaire s'exerçant sur le satellite a été simulé par calcul (figure 4) : on a obtenu une valeur moyenne de l'ordre de $15.10^{-6}$ Nm (micro Newton mètre). Les principes d'une telle simulation, compte tenu des indications générales précitées, sont à la portée de l'homme de métier et ne seront pas détaillés plus avant.

Le corps cylindrique 3 est recouvert de cellules photovoltaïques type BSR (Back Surface Reflector) fournissant une tension unitaire de 454 mV en début de vie et environ 425 mV en fin de vie (sept ans) du satellite.

Une tension de 28 V est utilisée pour l'alimentation électrique des équipements, soit environ 30 V aux bornes du générateur solaire. Un montage de 71 cellules en série assure donc une telle tension.

Une hauteur de 2.25m (sur 2.3m pour le corps cylindrique) est occupée par les cellules. Chaque cellule a donc une hauteur de 30 mm, compte tenu d'un espacement de 0.7 mm. On prend une largeur de cellule de 50 mm, l'ensemble correspondant à des valeurs typiques pour de telles cellules.

Comme déjà mentionné ci-dessus, le câblage est effectué de préférence par la mise en série de deux demi-rangées verticales, formant ainsi une boucle de courant par tranche verticale (figure 2) ; le principe serait toutefois valable pour une pluralité de boucles par tranche verticale.

Une boucle formée d'un groupe unique est également envisageable, conduisant à des cellules de hauteur 60 mm. Il est rappelé que le format des cellules solaires 5 et le positionnement des pattes de connection sur ces cellules peuvent être choisis de façon arbitraire, leur fabrication se faisant en pratique à la demande.

On notera que les colonnes 9 sont réparties par paires, les deux colonnes de chaque paire étant connectées électriquement l'une à l'autre par un nombre pair de liaisons électriques dans lesquelles circulent des courants de sens opposés, et ayant deux à deux des dimensions égales transversalement à l'axe,

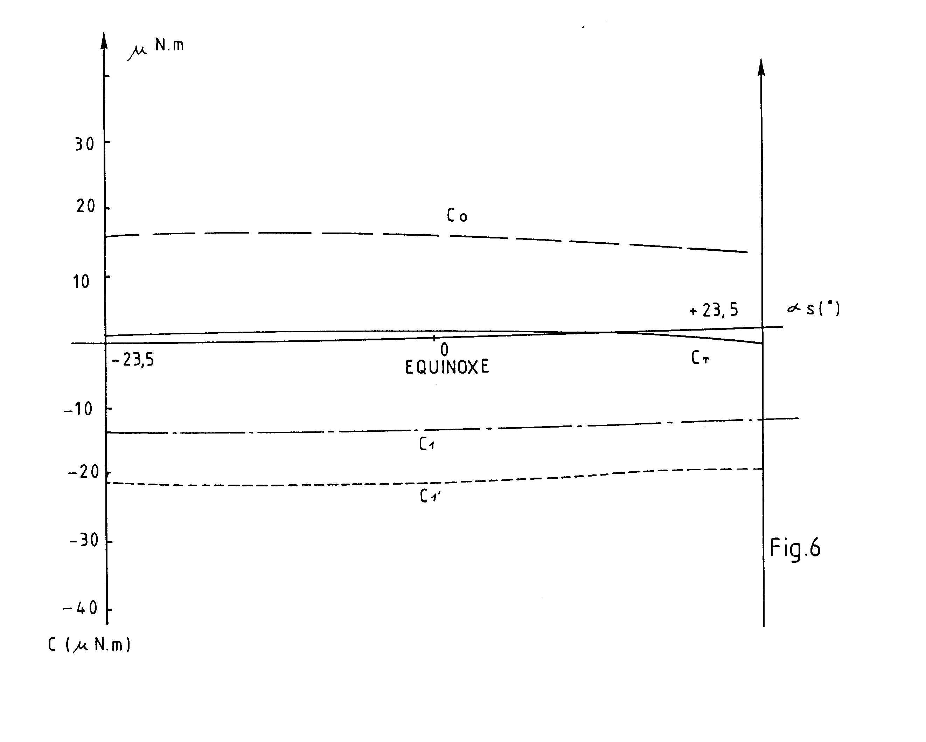

Avec les valeurs numériques indiquées, et en considérant une valeur de $P_o$ = 105 Watts/m² (fin de vie, équinoxe), on obtient une valeur maxima du couple compensateur $C_1$ (boucles parfaitement jointives) de 18.10⁻⁶Nm (noté $C'_1$ à la figure 6).

Le couple moyen à compenser étant de 15.10⁻⁶ Nm, on utilise donc un facteur d'efficacité $e$ de 83 % pour la réalisation du câblage au niveau des portions horizontales. Pour ce faire on positionne les pattes de fixation entre cellules en sorte que les brins transversaux 10 de la figure 2 représentent 83 % de la largeur d'une paire de cellules adjacentes, les brins longitudinaux 11 formés par la série de tronçons de connexion 12 étant bien sûr parallèles à Z ; on détermine ainsi le coefficient $e$ par l'écartement des brins 11 d'une boucle, c'est-à-dire par la longueur des brins 10.

Le niveau de couple résiduel $C_T$ après compensation est représenté sur la figure 6. Une réduction d'au moins un facteur 10 est obtenue.

Il va de soi que la description qui précède n'a été proposée qu'à titre d'exemple non limitatif et que de nombreuses variantes peuvent être proposées par l'homme de l'art sans sortir du cadre de l'invention. Ainsi, on peut obtenir un coefficient $e>1$, en imbriquant les boucles, en reliant par exemple, à la figure 2, non pas deux colonnes adjacentes de cellules, mais deux colonnes séparées par au moins une colonne de cellules appartenant à une autre boucle.

En fait, il a été indiqué ci-dessus une version optimale de l'invention permettant de compenser en quasi-totalité les perturbations dues à la pression de radiation solaire. L'invention couvre bien sûr des versions plus rudimentaires dans lesquelles le montage en boucle des cellules compense ne serait-ce qu'une partie des perturbations. Il est à la portée de l'homme de métier de déterminer, en fonction de la répartition des masses et de la géométrie du satellite considéré et des propriétés thermo-optiques de ses surfaces externes, dans quel sens faire circuler le courant dans les boucles de courant.

On appréciera que, au lieu de jouer sur le coefficient $e$, on peut choisir de mettre certaines boucles en régime de circulation de courant inverse de celui de la plupart des autres boucles.

On peut par ailleurs prévoir divers schémas de répartition des cellules entre les boucles (longues boucles verticales latéralement adjacentes comme précédemment, ou succession de boucles parallèlement à l'axe NORD-SUD, voire disposition en quinquonce ...). Toutefois de manière préférée, on cherche à ce que la paroi 4 soit occupée en quasi-totalité par des boucles.

**Revendications**

1. Satellite (1) destiné à être stabilisé en attitude sur une orbite terrestre par autorotation autour d'un axe (Z) au moins approximativement orienté NORD-SUD, comportant une paroi externe (4) généralement cylindrique coaxiale à cet axe, et un générateur solaire comprenant une pluralité de colonnes (9) de cellules solaires (5) portées par cette paroi parallèlement à et tout autour de cet axe, ces cellules étant réparties en groupes (G1, G2, G3) de cellules montées en série adaptées à fournir au moins une tension électrique donnée, caractérisée en ce que :
   - dans chacun d'une pluralité de groupes (G1, G2, G3) régulièrement répartis circonférentiellement, les cellules montées en série sont réparties à cheval sur deux colonnes, ces deux colonnes étant connectées électriquement l'une à l'autre par au moins deux liaisons électriques respectivement appelées NORD et SUD (10), et ayant des dimensions égales transversalement à l'axe, appartenant chacune à l'un des groupes, et formant conjointement avec ce ou ces groupe(s) au(x)quel(s) ces liaisons appartiennent une boucle électrique discontinue admettant un sens trigonométrique prédéterminé de parcours de courant en cas d'éclairage solaire des cellules appartenant à cette boucle,
   - ce sens trigonométrique prédéterminé de parcours de courant est le même pour au moins la majorité de ces boucles électriques en étant choisi en sorte que, à tout instant, les boucles qui sont éclairées à cet instant par le Soleil induisent, par interaction avec le champ magnétique terrestre, un couple de compensation autour d'un axe transversal instantané du satellite de sens opposé au couple de pression de radiation solaire subi par ce satellite autour de cet axe instantané.

2. Satellite selon la revendication 1, caractérisé en ce que lesdites colonnes sont reliées par deux liaisons électriques et seulement deux.

3. Satellite selon la revendication 1 ou la revendication 2, caractérisé en ce que chaque colonne n'est reliée qu'à une seule autre colonne.

4. Satellite selon l'une quelconque des revendications 1 à 3, caractérisé en ce que les deux colonnes sont connectées par leurs cellules extrêmes par deux liaisons électriques (10) de même longueur.

5. Satellite selon l'une quelconque des revendications 1 à 4, caractérisé en ce que chaque groupe de cellules (5) s'étend à cheval sur deux moitiés de colonnes.

6. Satellite selon l'une quelconque des revendications 1 à 5, caractérisé en ce que les colonnes, sur lesquelles les cellules montées en série sont réparties, sont adjacentes.

7. Satellite selon l'une quelconque des revendications 1 à 5, caractérisé en ce que les colonnes sur lesquelles les cellules montées en série sont réparties, sont séparées par au moins une autre colonne, les groupes de cellules formant ainsi des boucles imbriquées.

8. Satellite selon l'une quelconque des revendications 1 à 7, caractérisé en ce que les colonnes de cellules (5) s'étendent sensiblement sur toute la dimension axiale de la paroi généralement cylindrique (4).

9. Satellite selon l'une quelconque des revendications 1 à 8, caractérisé en ce que ladite pluralité de groupes comprend la plupart des groupes de cellules.

10. Satellite selon la revendication 9, caractérisé en ce que ladite pluralité de groupes comprend au moins les trois quarts environ des groupes de cellules.

11. Satellite selon la revendication 10, caractérisé en ce que ladite pluralité de groupes comprend au moins les neuf dixièmes environ des groupes de cellules.

12. Satellite selon l'une quelconque des revendications 1 à 11, caractérisé en ce que ledit sens trigonométrique prédéterminé de parcours de courant est le même pour au moins la plupart des boucles.

13. Satellite selon la revendication 12, caractérisé en ce que ledit sens trigonométrique prédéterminé de parcours de courant est le même pour au moins les trois quarts environ des boucles.

14. Satellite selon la revendication 13, caractérisé en ce que ledit sens trigonométrique prédéterminé de parcours de courant est le même pour au moins les neuf dixièmes environ des boucles.

## Claims

1. Satellite (1) adapted to have its attitude in a terrestrial orbit stabilised by spinning about an axis (Z) oriented at least approximately NORTH-SOUTH, comprising a generally cylindrical external wall (4) coaxial with said axis, and a solar generator comprising a plurality of columns (9) of solar cells (5) carried by said wall parallel to and all around said axis, said cells being divided into groups (G1, G2, G3) of cells connected in series adapted to supply at least one given electrical voltage, characterised in that:
   - in each of a plurality of groups (G1, G2, G3) equi-angularly distributed in the circumferential direction, the cells connected in series straddle two columns, said two columns being electrically connected to each other by at least two electrical connections respectively denoted NORTH and SOUTH (10) and having the same dimensions in the direction transverse to the axis, each belonging to one of the groups and forming with the group(s) to which said connections belong a discontinuous electrical loop allowing current to flow in a predetermined clockwise or counterclockwise direction when the cells of said loop are illuminated,
   - said predetermined clockwise or counterclockwise direction of current flow is the same for at least the majority of said electrical loops and being chosen so that, at any time, the loops illuminated by the Sun at this time, by virtue of interacting with the terrestrial magnetic field, produce a compensating torque about the instantaneous transverse axis of the satellite in the opposite direction to the solar radiation pressure torque exerted on the satellite about said instantaneous axis.

2. Satellite according to claim 1 characterised in that said columns are connected by only two electrical connections.

3. Satellite according to claim 1 or claim 2 characterised in that each column is connected to only one other column.

4. Satellite according to any one of claims 1 to 3 characterised in that the two columns are connected at their end cells by two electrical connections (10) of the same length.

**5.** Satellite according to any one of claims 1 to 4 characterised in that each group of cells (5) straddles two half-columns.

**6.** Satellite according to any one of claims 1 to 5 characterised in that the columns of cells connected in series are adjacent.

**7.** Satellite according to any one of claims 1 to 5 characterised in that the columns of cells connected in series are separated by at least one other column, the groups of cells thus forming interleaved loops.

**8.** Satellite according to any one of claims 1 to 7 characterised in that the columns of cells (5) extend over substantially all of the axial dimension of the generally cylindrical wall (4).

**9.** Satellite according to any one of claims 1 to 8 characterised in that said plurality of groups comprises most of the groups of cells.

**10.** Satellite according to claim 9 characterised in that said plurality of groups comprises at least approximately three quarters of the groups of cells.

**11.** Satellite according to claim 10 characterised in that said plurality of groups comprises at least approximately nine tenths of the groups of cells.

**12.** Satellite according to any one of claims 1 to 11 characterised in that said predetermined clockwise or counterclockwise direction of current flow is the same for at least most of the loops.

**13.** Satellite according to claim 12 characterised in that said predetermined clockwise or counterclockwise direction of current flow is the same for at least approximately three quarters of the loops.

**14.** Satellite according to claim 13 characterised in that said predetermined clockwise or counterclockwise direction of current flow is the same for at least approximately nine tenths of the loops.

**Patentansprüche**

**1.** Satellit (1), der dazu vorgesehen ist, durch Eigenrotation um eine wenigstens annähernd in NORD-SÜD-Richtung orientierte Achse (Z) auf einer Erdumlaufbahn lagestabilisiert zu werden, mit einer allgemein zylindrischen, zu dieser Achse koaxialen Außenwandung (4) und einem Solargenerator, der eine Vielzahl von Säulen (9) von Solarzellen (5) umfaßt, die von dieser Wandung parallel zu und vollständig um diese Achse herum gehalten werden und die in Gruppen (G1, G2, G3) von in Reihe geschalteten Zellen aufgeteilt sind, die dazu dienen, zumindest eine vorgegebene elektrische Spannung zu liefern,
**dadurch gekennzeichnet, daß**
- in jeder Gruppe aus einer Mehrzahl gleichmäßig über den Umfang verteilter Gruppen (G1, G2, G3) die in Reihe geschalteten Zellen rittlings übereinander angeordnet und auf zwei Säulen aufgeteilt sind, die miteinander durch mindestens zwei jeweils mit NORD und SÜD (10) bezeichnete elektrische Verbindungen verbunden sind, quer zur Achse gleiche Abmessungen aufweisen, deren jede einer der Gruppen zugeordnet ist und die zusammen mit der oder den Gruppe(n), der (denen) diese Verbindungen zugeordnet sind, eine unterbrochene elektrische Schleife bilden, die bei Sonnenlichteinfall auf die dieser Schleife zugehörigen Zellen eine vorbestimmte trigonometrische Richtung des Stromflusses zuläßt, und daß
- diese vorbestimmte trigonometrische Richtung des Stromflusses zumindest für die Mehrzahl dieser elektrischen Schleifen dieselbe und derart ausgewählt ist, daß zu jedem Zeitpunkt die zu diesem Zeitpunkt durch die Sonne beleuchteten Schleifen durch Wechselwirkung mit dem Erdmagnetfeld ein Ausgleichsdrehmoment um eine momentane Querachse des Satelliten in einer Richtung entgegen dem Drehmoment des Sonnenstrahlungsdrucks bewirken, dem dieser Satellit um seine momentane Achse herum ausgesetzt ist.

**2.** Satellit nach Anspruch 1, dadurch gekennzeichnet, daß die Säulen über zwei und nur zwei elektrische Verbindungen aneinander angeschlossen sind.

**3.** Satellit nach Anspruch 1 oder 2, dadurch gekennzeichnet, daß jede Säule nur an eine einzige andere Säule angeschlossen ist.

**4.** Satellit nach einem der Ansprüche 1 bis 3, dadurch gekennzeichnet, daß die zwei Säulen über ihre äußersten Zellen durch zwei elektrische Verbindungen (10) gleicher Länge aneinander angeschlossen sind.

5. Satellit nach einem der Ansprüche 1 bis 4, dadurch gekennzeichnet, daß jede Gruppe von Zellen (5) sich rittlings übereinander angeordnet auf zwei Säulenhälften erstreckt.

6. Satellit nach einem der Ansprüche 1 bis 5, dadurch gekennzeichnet, daß die Säulen, auf welche die in Serie geschalteten Zellen aufgeteilt sind, nebeneinander liegen.

7. Satellit nach einem der Ansprüche 1 bis 5, dadurch gekennzeichnet, daß die Säulen, auf welche die in Serie geschalteten Zellen aufgeteilt sind, durch mindestens eine weitere Säule voneinander getrennt sind, wobei die Zellen-Gruppen auf diese Weise verschachtelte Schleifen ausbilden.

8. Satellit nach einem der Ansprüche 1 bis 7, dadurch gekennzeichnet, daß die Säulen von Zellen (5) sich im wesentlichen über die gesamte axiale Abmessung der allgemein zylindrischen Wandung (4) erstrecken.

9. Satellit nach einem der Ansprüche 1 bis 8, dadurch gekennzeichnet, daß die besagte Vielzahl von Gruppen den Großteil der Zell-Gruppen umfaßt.

10. Satellit nach Anspruch 9, dadurch gekennzeichnet, daß diese Mehrzahl von Gruppen mindestens etwa drei Viertel der Zell-Gruppen umfaßt.

11. Satellit nach Anspruch 10, dadurch gekennzeichnet, daß diese Mehrzahl von Gruppen mindestens etwa neun Zehntel der Zell-Gruppen umfaßt.

12. Satellt nach einem der Ansprüche 1 bis 11, dadurch gekennzeichnet, daß die vorbestimmte trigonometrische Richtung des Stromflusses für zumindest den Großteil der Schleifen dieselbe ist.

13. Satellit nach Anspruch 12, dadurch gekennzeichnet, daß die vorbestimmte trigonometrische Richtung des Stromflusses für zumindest etwa drei Viertel der Schleifen dieselbe ist.

14. Satellit nach Anspruch 13, dadurch gekennzeichnet, daß die vorbestimmte trigonometrische Richtung des Stromflusses für zumindest etwa neun Zehntel der Schleifen dieselbe ist.

Fig.1

Fig.2

B

Mi

Mi

Ci

a

I

h

H

Fig.3

Fig.4

D

Fig.5

EP 0 469 945 B1

Fig.6

EP 0 469 945 B1